# EUROPÄISCHE PATENTSCHRIFT

(11) **EP 3 515 795 B1**
(45) Veröffentlichungstag und Bekanntmachung des Hinweises auf die Patenterteilung: **09.09.2020**
(21) Anmeldenummer: 17758043.8
(22) Anmeldetag: 21.07.2017
(51) Int. Cl.: B62D 35/00

(54) **SPOILER-ANORDNUNG FÜR EIN FAHRZEUG**
SPOILER ASSEMBLY FOR A VEHICLE
ENSEMBLE DÉFLECTEUR POUR UN VÉHICULE

(30) Priorität: 20.09.2016 DE 102016011317
(43) Veröffentlichungstag der Anmeldung: 31.07.2019
(73) Patentinhaber: WABCO Europe BVBA, 1170 Brussels (BE)
(72) Erfinder: GENCASLAN, Umut, 30451 Hannover (DE); MENTZENDORFF, Olaf, 30989 Gehrden (DE); VAN RAEMDONCK, Gandert Marcel Rita, 2611 PW Delft (NL)
(74) Vertreter: Koschnitzki, Thomas
(86) Internationale Anmeldenummer: PCT/EP2017/000890
(87) Internationale Veröffentlichungsnummer: WO 2018/054514

(56) Entgegenhaltungen:
- DE-A1-102009 014 860
- US-A1- 2008 093 886
- US-A1- 2010 106 380

## Beschreibung

Die Erfindung betrifft eine Spoiler-Anordnung für ein Fahrzeug, insbesondere einen Lkw. Die Spoiler-Anordnung kann insbesondere eine Heckspoiler-Anordnung mit einem Seiten-Luftleitelement und einem Dach-Luftleitelement sein.

Nutzfahrzeuge, insbesondere Lkw, mit im Wesentlichen kastenförmigem Heckbereich weisen im Allgemeinen ungünstige aerodynamische Eigenschaften auf. Daher sind Luftleitelemente zur Konturverlängerung und aerodynamischen Luftleitung bekannt, die insbesondere die Flächen der Seitenwände und des Dachs nach hinten verlängern, z. B. geradlinig oder auch in gewölbten Flächen zur Mitte hin. Hierdurch kann die Aerodynamik des Fahrzeugs verbessert und der Kraftstoffverbrauch entsprechend gesenkt werden.

Die Heckspoilereinrichtungen sind im Allgemeinen zwischen ihrer Grundstellung und einer ausgefalteten oder ausgefahrenen Fahrstellung zu verstellen. In der Grundstellung soll im Allgemeinen ein freier Zugang zu den im Heckbereich vorgesehenen Türen, z. B. zwei nach außen aufschwingenden Hecktüren, gegeben sein. Derartige Verstellungen sind jedoch z.T. problematisch, da die einzelnen Elemente bei der Verstellung oder Rück-Verstellung miteinander kollidieren können und die Länge der Luftleitelemente zur Vermeidung von Kollisionen oftmals begrenzt ist.

Die US 9,145,177 B2 beschreibt eine Heckspoilereinrichtung für einen Lkw. In der ausgefalteten Fahrstellung sind die Seiten-Luftleitelemente und Dach-Luftleitelemente direkt miteinander verbunden; sie können über an der Hecktüre angebrachte Zylinder ein- und ausgefahren werden.

Die DE 10 2009 014 860 A1, DE 20 2009 014 476 U1 beschreiben weitere Heckspoileranordnungen.

Der Erfindung liegt die Aufgabe zugrunde, eine Spoiler-Anordnung zu schaffen, die mit geringem Aufwand und hoher Sicherheit zwischen einer Grundstellung und einer Fahrstellung verstellbar ist.

Diese Aufgabe wird durch eine Spoiler-Anordnung nach Anspruch 1 gelöst. Die Unteransprüche beschreiben bevorzugte Weiterbildungen.

Die Spoiler-Anordnung kann insbesondere eine Heckspoiler-Anordnung sein, die ein oder zwei Seiten-Luftleitelemente und Dach-Luftleitelemente aufweist. Hierbei kann insbesondere bei dem üblichen Aufbau eines Lkw mit zwei nach außen aufschwenkenden Hecktüren für jede Hecktüre ein Seiten-Luftleitelement und ein Dach-Luftleitelement vorgesehen sein.

Eine derartige Heckspoiler-Anordnung ist insbesondere vollständig an der Hecktüre befestigbar, so dass keine oder keine relevanten Befestigungen an der Fahrzeugstruktur bzw. dem Fahrzeug erforderlich sind. In der eingefahrenen Grundstellung wird vorteilhafterweise ein Öffnen und Nachvorneschwenken der Hecktüre um annähernd 270° ermöglicht, so dass die Hecktüre vorne von außen an die Seitenwand gelegt und dort befestigt werden kann, wobei bei einer derartigen Ausbildung somit die eingefaltete Heckspoilereinrichtung zwischen der Hecktüre und der Seitenfläche bzw. Außenseite des Fahrzeugs aufgenommen ist.

Neben einer Heckspoiler-Einrichtung sind jedoch auch andere Spoiler-Anordnungen entsprechend ausbildbar, bei denen zwei Luftleitelemente sukzessive oder zeitlich ganz oder teilweise versetzt verstellt werden.

Der Erfindung liegt der Gedanke zugrunde, zwei verstellbare Luftleitelemente derartig versetzt oder sukzessive zu verstellen, dass zunächst in einer ersten Teilverstellung nur das erste Luftleitelement verstellt wird, und dieses bei seiner Verstellung die Verstellung des zweiten Luftleitelementes freigibt oder aktiviert.

Hierzu wird bei der ersten Teilverstellung des ersten Luftleitelementes vorzugsweise eine erste Positions- Schalteinrichtung betätigt, die die Verstellung des zweiten Luftleitelementes freigibt. Die erste Positions- Schalteinrichtung kann z. B. direkt durch das Luftleitelement, oder indirekt durch ein mit verstelltes Element, z.B. die erste Verstelleinrichtung, aktiviert werden.

Somit wird der Vorteil erreicht, dass eine Kollision der Luftleitelemente bei ihren Verstellungen, oder ein vertauschter Ausfaltvorgang mit falsch auseinander oder ineinander gefalteten Luftleitelementen vermieden werden kann. Bei einer Heckspoilereinrichtung, bei der in der Grundstellung das Dach- Luftleitelement auf die Hecktüre, und nachfolgend das Seiten-Luftleitelement auf das eingefaltete Dach-Luftleitelement und die Hecktüre gelegt wird, kann somit bei der Verstellung in die Fahrstellung das Seiten-Luftleitelement als erstes Luftleitelement verstellt werden. Falls die Verstellbewegung des ersten Luftleitelementes durch z. B. Reibung, oder während der Fahrt durch bereits vorliegende Luftströmungen behindert ist, beeinträchtigt das nicht die Reihenfolge des Ausfaltvorgangs. Erst bei Erreichen der ersten Teilverstellung gibt das erste Luftleitelement die Verstellung des zweiten Luftleitelementes frei. Somit kann das zweite Luftleitelement nachfolgend ebenfalls den Verstellvorgang bzw. Ausfaltvorgang in die Fahrstellung vornehmen, ohne mit dem ersten Luftleitelement zu kollidieren.

Die Verstellungen der Luftleitelemente können hintereinander bzw. sukzessive erfolgen, so dass das erste Luftleitelement mit der ersten Teil- Verstellung bereits vollständig verstellt ist, oder auch teilweise gleichzeitig, so dass in der zweiten Teil-Verstellung das erste und zweite Luftleitelement gemeinsam verstellt werden.

Die Spoiler-Anordnung ermöglicht somit mit geringem Hardware-Aufwand sichere Verstellungen und sichere Ausfalt- und Einfalt-Vorgänge, da die Reihenfolge der Verstellvorgänge sichergestellt ist. Somit können auch Spoiler-Anordnungen ausgebildet werden, bei denen die einzelnen Luftleitelemente oder weitere mechanische Teile sich in ihren Schwenkwegen überlappen oder überschneiden, da die Reihenfolge der Verstellung sichergestellt werden kann.

Indem die Positions-Schalteinrichtung direkt durch die Verstellung des ersten Luftleitelementes geschaltet wird, sind auch Fehl-Bedienungen oder Fehl-Einstellungen oder ausgeschlossen; solange das erste Luftleitelement die Schaltposition zur Freigabe des nachfolgenden zweiten Luftleitelementes nicht erreicht hat, kann keine pneumatische Verstellung erfolgen.

Auch die Rückverstellung kann durch eine Positions-Steuerung erfolgen, wobei hierzu vorteilhafterweise eine zweite Positions-Schalteinrichtung vorgesehen ist, die in einer ersten Teilverstellung der Rückverstellung zunächst das erste Luftleitelementes sperrt, bis das zweite Luftleitelement seine Schaltposition erreicht hat und die zweite Positions-Schalteinrichtung schaltet, wodurch die Ansteuerung, z. B. pneumatische Ansteuerung, des ersten Luftleitelement zugelassen wird.

Somit ist die Rückverstellung in entsprechender Weise wie die Verstellung sichergestellt.

Die Verstelleinrichtungen können insbesondere pneumatisch ausgebildet sein, z. B. als doppeltwirkende pneumatische Zylinder, die die Luftleitelemente in beide Richtungen verstellen können. Bei einer pneumatischen Ausbildung kann die erste Positions-Schalteinrichtung vorteilhafterweise als pneumatisches Ventil ausgebildet sein, das die zweite pneumatische Verstelleinrichtung ansteuert, und zwischen einer sperrenden und einer offenen Stellung verstellbar ist. Somit wird der Vorteil einer hohen Sicherheit und Zuverlässigkeit erreicht, da die pneumatische Ansteuerung der zweiten Verstelleinrichtung für das zweite Luftleitelement erst durch die Verstellung der ersten Positions-Schalteinrichtung freigegeben wird; vorher sind bei sperrender Stellung keine Verstellungen möglich.

Die Positions-Schalteinrichtung kann direkt als mechanisch verstellbares pneumatisches Ventil mit zwei Stellungen, d. h. einer sperrenden Stellung und bei Betätigung einer freigegebenen Stellung, ausgebildet sein. Es kann insbesondere als mechanisch über einen Anschlag verstellbares 3/2-Wegeventil ausgebildet sein. Ein derartiges Ventil ist kostengünstig ausbildbar und gewährleistet eine hohe Zuverlässigkeit.

Alternativ zu einer direkten mechanischen Betätigung der Positions-Schalteinrichtungen, d. h. der Ausbildung als mechanisch verstellbare pneumatische Ventile mit zwei Stellungen, ist auch eine elektrische Ansteuerung der Positions-Schalteinrichtungen möglich. So können Anschlagschalter oder Positions-Schalter (proximity switches) vorgesehen sein, die bei Annäherung des ersten Luftleitelementes oder zweiten Luftleitelementes an eine Position betätigt werden und einen Stromkreis schließen. Somit sind an pneumatischen Stelleinrichtungen für das erste Luftleitelement und/oder zweite Luftleitelement jeweils elektrisch betätigbare Steuerventile (Solenoid-Steuerventile) vorgeschaltet, deren Bestromung in Abhängigkeit der Position erfolgt.

Die pneumatischen Stelleinrichtungen können insbesondere doppeltwirkende pneumatische Zylinder sein, deren Zylinderraum und Kolbenraum somit jeweils an einen Steueranschluss eines gemeinsamen Spoiler-Steuerventils angeschlossen sind.

Die gesamte Spoiler-Anordnung kann hierbei mit einem kompakten pneumatischen bzw. elektropneumatischen System ausgebildet werden. So können die erste pneumatische Stelleinrichtung mit vorgeschalteter zweiter Positions-Schalteinrichtung, und die zweite pneumatische Stelleinrichtung mit vorgeschalteter erster Positions-Schalteinrichtung parallel geschaltet sein; insbesondere können z. B. bei einer Heckspoiler-Anordnung mit zwei Hecktüren auch die Vorrichtungen für beide Türen parallel geschaltet sein, so dass lediglich ein gemeinsames Spoiler-Steuerventil vorzusehen ist, das je nach Verstellung seinen ersten pneumatischen Steuerausgang belüftet, um die Verstellung in die Fahrstellung zu ermöglichen, oder seinen zweiten pneumatischen Steuerausgang für die Rückverstellung in die Grundstellung. Hierbei kann der jeweils andere Steuerausgang jeweils als Entlüftung dienen bzw. an eine Entlüftung angeschlossen sein.

Alternativ zu pneumatischen Verstellungen sind jedoch auch andere Betätigungen, insbesondere elektrisch oder hydraulisch möglich. Bei einer elektrischen Betätigung können die Positions-Schalteinrichtungen z. B. als elektrische Schalter ausgebildet sein. Hydraulische Verstellungen können entsprechend den pneumatischen Verstellungen ausgebildet sein, d.h. z. B. mit doppelwirkenden Kolben und Ventilen in deren Ansteuerung.

Die Erfindung wird im Folgenden anhand der beiliegenden Zeichnungen an einigen Ausführungsformen näher erläutert. Es zeigen:

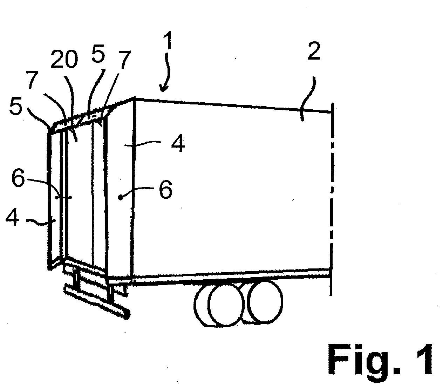

- Fig. 1: den Heckbereich eines Lkw mit einer Spoiler-Anordnung;
- Fig. 2: ein elektropneumatisches Schaltbild des Verstellsystems zur Verstellung der Spoiler-Anordnung gemäß einer Ausführungsform;
- Fig. 3: ein elektropneumatisches Schaltbild des Verstellsystems zur Verstellung der Spoiler-Anordnung gemäß einer weiteren Ausführungsform

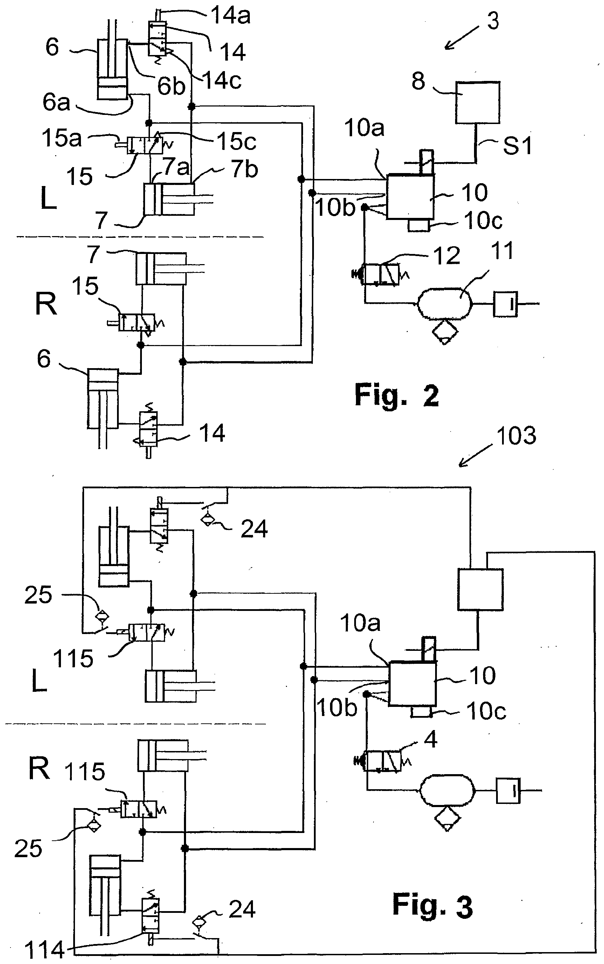

Eine Spoiler-Anordnung 1 ist an einem Lkw 2 angebracht. Die Spoiler-Anordnung 1 ist über ein elektropneumatisches Verstellsystem 3 verstellbar, das in Fig. 2 detaillierter gezeigt ist. Die Spoiler-Anordnung weist an jeder Hecktür 20 jeweils ein Seiten-Luftleitelement 4 als erstes Luftleitelement und ein Dach-Luftleitelement 5 als zweites Luftleitelement auf.

Die Seiten-Luftleitelemente 4 und Dach-Luftleitelemente 5 sind separat über pneumatische Verstelleinrichtungen verstellbar, die gemäß den Ausführungsformen der Fig. 2 und 3 doppeltwirkende (bidirektionale) pneumatische Zylinder 6 und 7 sind. Hierbei können je nach Größe der Luftleitelemente 4 und 5 auch z.B. jeweils zwei derartige pneumatische Zylinder 6, 7 parallel geschaltet sein.

Fig. 2 zeigt ein elektropneumatisches Schaltbild gemäß einer ersten Ausführungsform:
Eine ECU 8 (elektronische Steuereinheit) des Verstellsystems 3 steuert ein zentrales Spoiler-Steuerventil 10 mittels elektrischer Steuersignale S1 an. Das Spoiler-Steuerventil 10 wird z. B. in hier nicht näher gezeigter Weise von einem Druckluftbehälter 11 über eine Ventil-Ausbildung 12 mit Druckluft versorgt, und gibt die aufgenommene Druckluft nachfolgend je nach zu initiierendem Verstellvorgang entweder auf seinen ersten pneumatischen Steuereingang 10a für den Ausfahr-Vorgang bzw. die Ausfahr-Verstellung oder den zweiten pneumatischen Steuereingang 10b für die Rück-Verstellung aus.

Das Seiten-Luftleitelement 4 wird über einen (oder auch zwei parallel geschaltete) Seiten -Zylinder 6 verstellt; Fig. 2 zeigt zunächst die eingefahrene Grundstellung bzw. Ruhestellung. Der doppelt wirkende (bidirektionale) pneumatische Seiten -Zylinder 6 weist einen ersten pneumatischen Anschluss 6a, der direkt an den ersten pneumatischen Steuerausgang 10a des Spoiler-Steuerventils 10 angeschlossen ist, sowie einen zweiten pneumatischen Anschluss 6b auf, der über ein mechanisch verstellbares Seiten-Anschlagventil mit dem zweiten pneumatischen Steuerausgang 10b des Spoiler-Steuerventils 10 verbunden ist, wobei das Dach-Anschlagventil 14 in dem gezeigten Grundzustand derartig geschaltet ist, dass es den zweiten pneumatischen Anschluss 6b entlüftet. Nach Verstellung des Dach - Anschlagsventils 14 wird der zweite pneumatische Anschluss 6b an den zweiten pneumatischen Steuereingang 10b gelegt.

Entsprechend ist - symmetrisch, aber vertauscht hierzu - der Dach -Zylinder 7 mit seinem ersten pneumatischen Anschluss 7a über ein Seiten- Anschlagventil 15 an den ersten pneumatischen Steuerausgang 10a angeschlossen, und mit seinem zweiten pneumatischen Anschluss 7b direkt an den zweiten pneumatischen Steuerausgang 10b.

Das Dach -Anschlagventil 14 weist als mechanischen Steuereingang einen Druckschalter 14a auf und ist mechanisch mit dem Dach -Luftleitelement 5 der betreffenden Seite, hier somit der linken Seite, gekoppelt. Diese mechanische Kopplung kann durch direkte Anbringung des Dach -Anschlagventils 14 am Dach -Luftleitelement 5, oder auch indirekt, durch ein zusätzliches mechanisches, verstellbares Bauteil, z. B. einen vom Dach -Luftleitelement 5 verstellten mechanischen Hebel erfolgen; relevant hierbei ist zunächst die mechanische Kopplung der Verstellbewegung des Dach -Luftleitelementes 5 und der hieraus folgenden mechanischen Betätigung des Druckschalters 14a. In entsprechender Weise ist das Seiten-Anschlagventil 15 über einen Druckschalter 15a zwischen seiner gezeigten Ruhestellung und der betätigten Stellung verstellbar, wobei der Druckschalter 15a wiederum betätigbar ist bei der Verstellung des Seiten -Luftleitelementes 4; hierzu kann wiederum das gesamte Seiten -Anschlagventil 15 mit dem Seiten -Luftleitelement 4 verstellbar sein und bei der Verstellung mit seinem Druckschalter 15a gegen einen Anschlag, z. B. des Lkw 2, oder auch der Spoiler-Anordnung 1, stoßen, oder das Seiten -Luftleitelement 4, oder auch ein durch das Seiten - Luftleitelement 4 verstellbares mechanisches Teil stößt bei seiner Verstellung gegen den Druckschalter 15a. Somit sind direkte und indirekte Betätigung möglich.

Die gezeigte Spoiler-Anordnung 1 und das elektropneumatische Verstellsystem 3 sind somit zunächst bezüglich der linken und rechten Seite symmetrisch und separat ausgebildet, da beide Seiten parallel über die Steuereingänge 10a und 10b angesteuert werden, und weiterhin ist an jeder Seite eine symmetrische bzw. vertauscht symmetrische Anordnung der Zylinder 6, 7 und der Druckschalter 14 und 15 vorgesehen. Hierdurch wird die ordnungsgemäße Einhaltung der Reihenfolge der Einfahr- und Ausfahrvorgänge eingehalten:
Von der Ruhestellung ausgehend wird bei Ausgabe eines Steuersignals S1 für die (Auswärts-)Verstellung der erste pneumatische Steuereingang 10a des Spoiler-Steuerventils 10 belüftet, d. h. mit Druckluft versorgt. Hierdurch wird entsprechend der erste pneumatische Anschluss 6a des Seiten- Zylinders 6 mit Druckluft versorgt, so dass der Seiten -Zylinder 6 verstellt wird und das Seiten -Luftleitelement 4 verstellt. Die über den zweiten pneumatischen Anschluss 6b ausgegebene Luft des Kolbenraums des Seiten -Zylinders 6 kann über das Dach-Anschlagventil 14 ausgegeben werden, das in seiner Grundstellung den zweiten pneumatischen Anschluss 6b an eine Entlüftung 14b legt.

Das Seiten -Anschlagventil 15 ist in dieser ersten Teil-Verstellung zunächst in seiner gezeigten sperrenden Grundstellung, so dass der über das Seiten - Anschlagventil 15 angeschlossene Seiten -Zylinder 7 nicht über seinen ersten pneumatischen Anschluss 7a belüftet werden kann.

Bei der weiteren mechanischen Verstellung des Seiten-Zylinders 6 wird am Ende der ersten Teil-Verstellung, z. B. nach einem ersten Verstellweg, der Druckschalter 15a betätigt, z. B. durch das Seiten -Luftleitelement 4 selbst bzw. ein mit dem Seiten -Luftleitelement 4 gekoppeltes mechanisches Bauteil wie z. B. den Kolben des Zylinders 6. Grundsätzlich ist es aber auch möglich, dass das Anschlagventil 15 die Verstellbewegung mit durchführt und gegen einen festen Anschlag des LKW 2 gelangt. Durch die Betätigung des Druckschalters 15a wird das Seiten-Anschlagventil 15 in seine offene Stellung verstellt, so dass nachfolgend in der zweiten Teil-Verstellung auch der Dach-Zylinder 7 über seinen ersten pneumatischen Anschluss 7a belüftet und somit betätigt wird und das Dach -Luftleitelement 5 verstellt. Hierbei kann die über den zweiten pneumatischen Anschluss 7b ausgegebene Druckluft z. B. über den zweiten Steuerausgang 10b und das Spoiler-Steuerventil 10 entlüftet werden, das hierzu eine Entlüftung 10c aufweist.

Somit wird eine Reihenfolge der Verstellbewegung der Luftleitelemente 4 und 5 sichergestellt: Zunächst wird immer das Seiten-Luftleitelement 4 verstellt, bis dieses nach einem ersten Verstellweg zumindest hinreichend geschwenkt ist, so dass das Dach -Luftleitelement 5 bei seiner Verstellbewegung nicht mit dem Seiten -Luftleitelement 4 kollidiert. Somit wird eine Kollision der Auswärts-Verstellung sicher vermieden.

Für die Rück-Verstellung wird der zweite pneumatische Steuerausgang 10b belüftet, an den direkt der zweite pneumatische Anschluss 7b des Dach - Zylinders 7 angeschlossen ist. Somit wird der Dach -Zylinder 7 rückverstellt und hierdurch das Dach-Luftleitelement 5 eingeschwenkt. Nach einer ersten Rück- Teilverstellung gelangt das Dach-Luftleitelement 5 oder ein mit ihm verstelltes Bauteil, z. B. auch der Kolben des Dach -Zylinders 7, gegen den Druckschalter 14a des Dach -Anschlagventils 14, das hierdurch in seine offene Stellung verstellt wird, so dass nachfolgend in der zweiten Teilverstellung der Rückverstellung beide zweiten pneumatischen Anschlüsse 6b und 7b an den zweiten pneumatischen Steuerausgang 10b angeschlossen sind.

Somit sind die Verstellung und Rück-Verstellung invers zueinander: jeweils ein pneumatischer Anschluss jedes Zylinders 6 oder 7 ist direkt an einen Steuerausgang 10a, 10b angeschlossen, der andere pneumatische Anschluss ist über ein Anschlagventil 14, 15 an den anderen Steuerausgang 10b, 10a angeschlossen.

Bei den Ausführungsformen der Fig. 3 sind Dach -Anschlagventile 114 und Seiten -Anschlagventile 115 mit jeweils einem elektrischen Steuereingang 114a, 115a, vorgesehen, wobei die mechanische Betätigung am Ende der ersten Teil-Verstellung (sowohl der Auswärts-Verstellung als auch der Rückverstellung) über separate Druckschalter 24, 25 erfolgt: Ein Dach - Druckschalter 24 schaltet die Stromversorgung des Dach -Anschlagsventils 14, entsprechend ein Seiten-Druckschalter 25 die Stromversorgung des Seiten-Anschlagventils 15. Ansonsten liegt die gleiche funktionelle Ausbildung mit dem gleichen Schaltvorgang beim Einfalten und Ausfalten vor.

### Bezugszeichenliste (Teil der Beschreibung)

- 1: Spoiler-Anordnung
- 2: Lkw
- 3, 103: elektropneumatisches Verstellsystem
- 4: Seiten-Luftleitelement
- 5: Dach-Luftleitelement

- 6: Seiten-Zylinder, erste pneumatische Verstelleinrichtung
- 6a: erster pneumatischer Anschluss
- 6b: zweiter pneumatischer Anschluss

- 7: Dach-Zylinder, zweite pneumatische Verstelleinrichtung
- 7a: erster pneumatischer Anschluss
- 7b: zweiter pneumatischer Anschluss

- 8: ECU
- 10: Spoiler-Steuerventil
- 10a: erster pneumatischer Steuerausgang für den Ausfahr-Vorgang
- 10b: zweiter pneumatischer Steuerausgang für den Rückstell-Vorgang
- 10c: Entlüftung an Spoiler-Steuerventil 10
- 11: Druckluftbehälter
- 12: Ventilanordnung

- 14: Dach -Anschlagventil, zweite Positions-Schalteinrichtung in Fig. 2
- 14a: Druckschalter
- 14b: Entlüftung an Dach -Anschlagventil 14
- 15: Seiten-Anschlagventil, erste Positions-Schalteinrichtung in Fig. 2
- 15a: Druckschalter
- 15b: Entlüftung an Seiten -Anschlagventil 15

- 114: elektrischer Dach - Anschlagschalter, zweite Positions-Schalteinrichtung in Fig. 3
- 115: elektrischer Seiten- Anschlagschalter, erste Positions-Schalteinrichtung in Fig. 3

- 20: Hecktür

## Patentansprüche

1. Spoiler-Anordnung (1), mit:
einem ersten Luftleitelement (4), das durch eine erste Verstelleinrichtung (6) zwischen einer Grundstellung und einer aktivierten Fahrstellung verstellbar ist,
einem zweiten Luftleitelement (5), das durch eine zweite Verstelleinrichtung (7) zwischen einer Grundstellung und einer aktivierten Fahrstellung verstellbar ist,
**dadurch gekennzeichnet, dass**
bei der Verstellung von der Grundstellung in die Fahrstellung in einer ersten Teilverstellung das erste Luftleitelement (4) verstellbar und das zweite Luftleitelement (5) nicht verstellbar ist, und
in einer der ersten Teilverstellung nachfolgenden zweiten Teilverstellung das zweite Luftleitelement (5) verstellbar ist,
wobei die Ansteuerung der zweiten Verstelleinrichtung (7) über eine zweite Positions-Schalteinrichtung (15, 115) erfolgt, die in Abhängigkeit von einer Verstellposition des ersten Luftleitelementes (4) zwischen einer offenen Stellung zur Betätigung der zweiten Verstelleinrichtung (7) und einer sperrenden Stellung schaltbar ist.

2. Spoiler-Anordnung (1) nach Anspruch 1,
**dadurch gekennzeichnet, dass**
bei der Rückverstellung von der Fahrstellung in die Grundstellung in einer ersten Teilverstellung das zweite Luftleitelement (5) verstellbar und das erste Luftleitelement (5) nicht verstellbar ist,
in einer der ersten Teilverstellung nachfolgenden zweiten Teilverstellung das erste Luftleitelement (4) verstellbar ist,
wobei die Ansteuerung der ersten Verstelleinrichtung (6) über eine erste Positions-Schalteinrichtung (14, 114) erfolgt, die in Abhängigkeit von einer Verstellposition des zweiten Luftleitelementes (5) zwischen einer offenen Stellung zur Betätigung der ersten Verstelleinrichtung (6) und einer sperrenden Stellung schaltbar ist.

3. Spoiler-Anordnung (1) nach Anspruch 1 oder 2,
**dadurch gekennzeichnet, dass** die mindestens eine Positions- Schalteinrichtung (15, 115, 14, 114) in der ersten Teilverstellung in ihrer sperrenden Stellung ist und die Ansteuerung der angesteuerten Verstelleinrichtung (6, 7) blockiert und am Ende der ersten Teilverstellung durch das verstellte Luftleitelementes (4, 5) direkt oder indirekt verstellbar ist in ihre offene Stellung.

4. Spoiler-Anordnung (1) nach einem der vorherigen Ansprüche,
**dadurch gekennzeichnet, dass** in der zweiten Teilverstellung beide Luftleitelement (4, 5) verstellbar sind, vorzugsweise mit durchgehender Verstellbarkeit des ersten Luftleitelementes (4) in beiden Teil-Verstellungen und Zuschaltung der Verstellbarkeit des zweiten Luftleitelementes (5) in der zweiten Teil-Verstellung.

5. Spoiler-Anordnung (1) nach einem der vorherigen Ansprüche,
**dadurch gekennzeichnet, dass** die Verstelleinrichtungen (6, 7) als pneumatische Verstelleinrichtungen, z. B. pneumatische Zylinder (6, 7), ausgebildet sind und die mindestens eine Positions- Schalteinrichtung (14, 114, 15, 115) ein pneumatisches Ventil aufweist, das zwischen einer offenen Stellung zur pneumatischen Versorgung der Verstelleinrichtung (6, 7) und einer sperrenden Stellung schaltbar ist.

6. Spoiler-Anordnung (1) nach Anspruch 5,
**dadurch gekennzeichnet, dass** die erste pneumatische Verstelleinrichtung (6) und die zweite pneumatische Verstelleinrichtung (7) als doppeltwirkende pneumatische Zylinder (6, 7) ausgebildet sind, die parallel an gemeinsame pneumatische Steuerausgänge (10a, 10b) eines pneumatischen Spoiler-Ventils (10) angeschlossen sind.

7. Spoiler-Anordnung (1) nach Anspruch 6,
**dadurch gekennzeichnet, dass** das Spoiler-Ventil (10) zwei pneumatische Steuerausgänge (10a, 10b) aufweist, an die jeweils beide Verstelleinrichtungen (6, 7) angeschlossen sind, wobei bei den Verstellungen jeweils ein pneumatischer Steuerausgang (10a, 10b) des Spoiler-Steuerventils (10) als aktiver Ausgang zur Ausgabe von Druckluft für die Verstellung, und der andere Steuerausgang (10b, 10a) als passiver Ausgang vorgesehen und an eine Entlüftung (10c) angeschlossen ist.

8. Spoiler-Anordnung (1) nach Anspruch 7, **dadurch gekennzeichnet, dass** an jeden der beiden pneumatischen Steuerausgänge (10a, 10b) jeweils ein pneumatischer Anschluss (6a, 7b) der einen pneumatischen Verstelleinrichtung (6, 7) direkt und ein pneumatischer Anschluss (6b, 7a) der anderen pneumatischen Verstelleinrichtung (7, 6) über eine Positions- Schalteinrichtung (15, 14; 115, 114) angeschlossen ist, jeweils zur direkten Betätigung der einen Verstelleinrichtung in der ersten Teilverstellung und indirekten Betätigung der anderen Verstelleinrichtung in der zweiten Teilverstellung.

9. Spoiler-Anordnung (1) nach einem der vorherigen Ansprüche, **dadurch gekennzeichnet, dass** die mindestens eine Positions- Schalteinrichtung (14, 15) jeweils einen mechanisch betätigbaren Steuereingang, z. B. einen Druckknopf (15a, 14a), eines pneumatischen Ventils aufweist, der bei der Teilverstellung gegen einen Anschlag gerät zum Umschalten der Positions-Schalteinrichtung (14, 15), vorzugsweise mit einer federvorgespannten, sperrenden Grundstellung.

10. Spoiler-Anordnung (1) nach einem der Ansprüche 1 bis 8,
**dadurch gekennzeichnet, dass** die Positions-Schalteinrichtungen (114, 115) jeweils einen mechanisch aktivierbaren elektrischen Positions-schalter (24, 25) und ein elektrisch betätigbares pneumatisches Ventil (115, 114) aufweisen, das durch Schließen des elektrischen Positionsschalters (24, 25) bestrombar und hierdurch schaltbar ist.

11. Spoiler-Anordnung (1) nach einem der Ansprüche 4 bis 10,
**dadurch gekennzeichnet, dass** die Positions-Schalteinrichtungen (15, 14; 115, 114) jeweils ein pneumatisches Ventil, insbesondere 3/2 Wegeventil (15, 14; 115, 114), aufweisen.

12. Spoiler-Anordnung (1) nach einem der Ansprüche 1 bis 4,
**dadurch gekennzeichnet, dass** die Verstelleinrichtungen elektrisch betätigt sind und die Positions-Schalteinrichtungen elektrische Schalter aufweisen.

13. Spoiler-Anordnung (1) nach einem der vorherigen Ansprüche,
**dadurch gekennzeichnet, dass** sie eine Heckspoiler-Anordnung ist, mit mindestens einem Dach-Luftleitelement (4) und mindestens einem Seiten-Luftleitelement (5).

14. Spoiler-Anordnung (1) nach Anspruch 13, **dadurch gekennzeichnet, dass**
das Seiten-Luftleitelement (5) das erste Luftleitelement und das Dach-Luftleitelement (4) das zweite Luftleitelement ist,
in der Grundstellung das Dach-Luftleitelement (4) auf oder über die Hecktüre (3) und das Seiten-Luftleitelement (5) auf oder über die Hecktüre (3) und das Dach-Luftleitelement (4) legbar ist, und
bei der Verstellung von der Grundstellung in die Fahrstellung in der ersten Teil-Verstellung das Seiten-Luftleitelement (5) ohne Verstellung des Dach-Luftleitelementes (4) verstellbar ist.

15. Spoiler-Anordnung (1) nach Anspruch 13 oder 14,
**dadurch gekennzeichnet, dass** für jede Hecktüre (20) eines Lkw (1) jeweils ein Seiten-Luftleitelement (5) und ein Dach-Luftleitelement (4) vorgesehen sind, die parallel angesteuert sind, z. B. über ein zentrales Spoiler-Steuerventil (10).

16. Spoiler-Anordnung (1) nach einem der Ansprüche 13 bis 15,
**dadurch gekennzeichnet, dass** die Luftleitelemente (4, 5) und Verstelleinrichtungen (6, 7), vorzugsweise die ganze Spoiler-Anordnung, vollständig an der Hecktüre (20) oder den beiden Hecktüren (20) des Fahrzeugs montierbar ist.

17. Fahrzeug (2), insbesondere Lkw, mit einer Spoiler-Anordnung (1) nach einem der vorherigen Ansprüche.

18. Fahrzeug nach Anspruch 17,
**dadurch gekennzeichnet, dass** im eingefalteten Grundzustand die Hecktüren (20) öffenbar und um fast 270° nach vorne schwenkbar sind zur Anbindung an der Seitenwand des Fahrzeugs und zur Aufnahme der eingefalteten Spoiler-Anordnung (1) zwischen Hecktüre und der Seitenwand

## Claims

1. Spoiler assembly (1), comprising:
a first air-guiding element (4) which is adjustable between a basic position and an activated driving position by a first adjustment device (6),
a second air-guiding element (5) which is adjustable between a basic position and an activated driving position by a second adjustment device (7),
**characterized in that**,
during the adjustment from the basic position into the driving position, in a first partial adjustment the first air-guiding element (4) is adjustable and the second air-guiding element (5) is not adjustable, and,
in a second partial adjustment following the first partial adjustment, the second air-guiding element (5) is adjustable,
wherein the second adjustment device (7) is activated via a second position-switching device (15, 115) which is switchable between an open position for actuating the second adjustment device (7) and a blocking position depending on an adjustment position of the first air-guiding element (4).

2. Spoiler assembly (1) according to Claim 1,
**characterized in that**,
during the adjustment back from the driving position into the basic position, in a first partial adjustment the second air-guiding element (5) is adjustable and the first air-guiding element (5) is not adjustable,
in a second partial adjustment following the first partial adjustment, the first air-guiding element (4) is adjustable,
wherein the first adjustment device (6) is activated via a first position-switching device (14, 114) which is switchable between an open position for actuating the first adjustment device (6) and a blocking position depending on an adjustment position of the second air-guiding element (5).

3. Spoiler assembly (1) according to Claim 1 or 2,
**characterized in that**, in the first partial adjustment, the at least one position-switching device (15, 115, 14, 114) is in its blocking position and blocks the activation of the activated adjustment device (6, 7) and, at the end of the first partial adjustment, is adjustable into its open position directly by the adjusted air-guiding element (4, 5) or indirectly.

4. Spoiler assembly (1) according to one of the preceding claims,
**characterized in that**, in the second partial adjustment, the two air-guiding elements (4, 5) are adjustable, preferably with continuous adjustability of the first air-guiding element (4) in both partial adjustments and switching on of the adjustability of the second air-guiding element (5) in the second partial adjustment.

5. Spoiler assembly (1) according to one of the preceding claims,
**characterized in that** the adjustment devices (6, 7) are designed as pneumatic adjustment devices, e.g. pneumatic cylinders (6, 7), and the at least one position-switching device (14, 114, 15, 115) has a pneumatic valve which is switchable between an open position for pneumatically supplying the adjustment device (6, 7) and a blocking position.

6. Spoiler assembly (1) according to Claim 5,
**characterized in that** the first pneumatic adjustment device (6) and the second pneumatic adjustment device (7) are designed as double-acting pneumatic cylinders (6, 7) which are connected in parallel to common pneumatic control outputs (10a, 10b) of a pneumatic spoiler valve (10) .

7. Spoiler assembly (1) according to Claim 6,
**characterized in that** the spoiler valve (10) has two pneumatic control outputs (10a, 10b) to which the two adjustment devices (6, 7) are in each case connected, wherein, during the adjustments, in each case one pneumatic control output (10a, 10b) of the spoiler control valve (10) is provided as an active output for outputting compressed air for the adjustment, and the other control output (10b, 10a) is provided as a passive output and is connected to a venting means (10c).

8. Spoiler assembly (1) according to Claim 7,
**characterized in that** in each case one pneumatic connection (6a, 7b) of the one pneumatic adjustment device (6, 7) is connected directly, and one pneumatic connection (6b, 7a) of the other pneumatic adjustment device (7, 6) is connected via a position-switching device (15, 14; 115, 114) to each of the two pneumatic control outputs (10a, 10b), in each case for the direct actuation of the one adjustment device in the first partial adjustment and for the indirect actuation of the other adjustment device in the second partial adjustment.

9. Spoiler assembly (1) according to one of the preceding claims, **characterized in that** the at least one position-switching device (14, 15) in each case has a mechanically actuable control input, e.g. a pushbutton (15a, 14a), of a pneumatic valve, which, during the partial adjustment, makes contact with a stop for switching over the position-switching device (14, 15), preferably with a spring-prestressed blocking basic position.

10. Spoiler assembly (1) according to one of Claims 1 to 8,
**characterized in that** the position-switching devices (114, 115) each have a mechanically activatable electric position switch (24, 25) and an electrically actuable pneumatic valve (115, 114) which, by closing of the electric position switch (24, 25), can be energized and can thereby be switched.

11. Spoiler assembly (1) according to one of Claims 4 to 10,
**characterized in that** the position-switching devices (15, 14; 115, 114) each have a pneumatic valve, in particular 3/2-way directional control valve (15, 14; 115, 114).

12. Spoiler assembly (1) according to one of Claims 1 to 4,
**characterized in that** the adjustment devices are electrically actuated and the position-switching devices have electric switches.

13. Spoiler assembly (1) according to one of the preceding claims,
**characterized in that** it is a rear spoiler assembly, with at least one roof air-guiding element (4) and at least one side air-guiding element (5).

14. Spoiler assembly (1) according to Claim 13,
**characterized in that**
the side air-guiding element (5) is the first air-guiding element and the roof air-guiding element (4) is the second air-guiding element,
in the basic position the roof air-guiding element (4) can be placed onto or above the rear door (3) and the side air-guiding element (5) can be placed onto or above the rear door (3) and the roof air-guiding element (4), and,
during the adjustment from the basic position into the driving position, in the first partial adjustment the side air-guiding element (5) is adjustable without adjustment of the roof air-guiding element (4).

15. Spoiler assembly (1) according to Claim 13 or 14,
**characterized in that**, for each rear door (20) of a lorry (1), a side air-guiding element (5) and a roof air-guiding element (4) are in each case provided, which are activated in parallel, e.g. via a central spoiler control valve (10).

16. Spoiler assembly (1) according to one of Claims 13 to 15,
**characterized in that** the air-guiding elements (4, 5) and adjustment devices (6, 7), preferably the entire spoiler assembly, can be entirely mounted on the rear door (20) or on the two rear doors (20) of the vehicle.

17. Vehicle (2), in particular a lorry, with a spoiler assembly (1) according to one of the preceding claims.

18. Vehicle according to Claim 17,
**characterized in that**, in the folded-in basic state, the rear doors (20) are openable and are pivotable forwards by virtually 270° for connecting to the side wall of the vehicle and for receiving the folded-in spoiler assembly (1) between rear door and the side wall.

## Revendications

1. Agencement déflecteur (1), comprenant :
un premier élément de guidage d'air (4), qui est ajustable par un premier dispositif d'ajustement (6) entre une position de base et une position de conduite activée,
un deuxième élément de guidage d'air (5), qui est ajustable par un deuxième dispositif d'ajustement (7) entre une position de base et une position de conduite activée,
**caractérisé en ce que**
lors de l'ajustement de la position de base dans la position de conduite, dans un premier ajustement partiel, le premier élément de guidage d'air (4) est ajustable et le deuxième élément de guidage d'air (5) n'est pas ajustable, et
dans un deuxième ajustement partiel succédant au premier ajustement partiel, le deuxième élément de guidage d'air (5) est ajustable,
la commande du deuxième dispositif d'ajustement (7) ayant lieu par l'intermédiaire d'un deuxième dispositif de commutation de position (15, 115) qui, en fonction d'une position d'ajustement du premier élément de guidage d'air (4), est commutable entre une position ouverte pour l'actionnement du deuxième dispositif d'ajustement (7) et une position de blocage.

2. Agencement déflecteur (1) selon la revendication 1, **caractérisé en ce que**, lors de l'ajustement en retour de la position de conduite dans la position de base, dans un premier ajustement partiel, le deuxième élément de guidage d'air (5) est ajustable et le premier élément de guidage d'air (5) n'est pas ajustable,
dans un deuxième ajustement partiel succédant au premier ajustement partiel, le premier élément de guidage d'air (4) est ajustable,
la commande du premier dispositif d'ajustement (6) ayant lieu par l'intermédiaire d'un premier dispositif de commutation de position (14, 114) qui, en fonction d'une position d'ajustement du deuxième élément de guidage d'air (5), est commutable entre une position ouverte pour l'actionnement du premier dispositif d'ajustement (6) et une position de blocage.

3. Agencement déflecteur (1) selon la revendication 1 ou 2, **caractérisé en ce que** ledit au moins un dispositif de commutation de position (15, 115, 14, 114) dans le premier ajustement partiel est dans sa position de blocage et bloque la commande du dispositif d'ajustement commandé (6, 7) et est ajustable directement ou indirectement dans sa position ouverte à la fin du premier ajustement partiel par l'élément de guidage d'air ajusté (4, 5).

4. Agencement déflecteur (1) selon l'une quelconque des revendications précédentes, **caractérisé en ce que**, dans le deuxième ajustement partiel, les deux éléments de guidage d'air (4, 5) sont ajustables, de préférence avec une ajustabilité continue du premier élément de guidage d'air (4) dans les deux ajustements partiels et une mise en marche de l'ajustabilité du deuxième élément de guidage d'air (5) dans le deuxième ajustement partiel.

5. Agencement déflecteur (1) selon l'une quelconque des revendications précédentes, **caractérisé en ce que** les dispositifs d'ajustement (6, 7) sont configurés sous la forme de dispositifs d'ajustement pneumatiques, p. ex. de cylindres pneumatiques (6, 7), et ledit au moins un dispositif de commutation de position (14, 114, 15, 115) comprend une soupape pneumatique, qui est commutable entre une position ouverte pour l'alimentation pneumatique du dispositif d'ajustement (6, 7) et une position de blocage.

6. Agencement déflecteur (1) selon la revendication 5, **caractérisé en ce que** le premier dispositif d'ajustement pneumatique (6) et le deuxième dispositif d'ajustement pneumatique (7) sont configurés sous la forme de cylindres pneumatiques à double effet (6, 7), qui sont raccordés en parallèle à des sorties de commande pneumatiques communes (10a, 10b) d'une soupape de déflecteur pneumatique (10).

7. Agencement de déflecteur (1) selon la revendication 6, **caractérisé en ce que** la soupape de déflecteur (10) comprend deux sorties de commande pneumatiques (10a, 10b), auxquelles deux dispositifs d'ajustement (6, 7) sont respectivement raccordés, lors des ajustements, respectivement une sortie de commande pneumatique (10a, 10b) de la soupape de commande de déflecteur (10) étant prévue en tant que sortie active pour l'émission d'air comprimé pour l'ajustement, et l'autre sortie de commande (10b, 10a) étant prévue en tant que sortie passive et raccordée à une aération (10c).

8. Agencement déflecteur (1) selon la revendication 7, **caractérisé en ce qu'**un raccord pneumatique (6a, 7b) d'un dispositif d'ajustement pneumatique (6, 7) est raccordé directement et un raccord pneumatique (6b, 7a) de l'autre dispositif d'ajustement pneumatique (7, 6) est raccordé par l'intermédiaire d'un dispositif de commutation de position (15, 14 ; 115, 114) à chacune des deux sorties de commande pneumatiques (10a, 10b), respectivement pour l'actionnement direct d'un dispositif d'ajustement dans le premier ajustement partiel et pour l'actionnement indirect de l'autre dispositif d'ajustement dans le deuxième ajustement partiel.

9. Agencement déflecteur (1) selon l'une quelconque des revendications précédentes, **caractérisé en ce que** ledit au moins un dispositif de commutation de position (14, 15) comprend respectivement une entrée de commande actionnable mécaniquement, p. ex. un bouton-poussoir (15a, 14a), d'une soupape pneumatique, qui arrive contre une butée lors de l'ajustement partiel pour la commutation du dispositif de commutation de position (14, 15), de préférence avec une position de base de blocage, précontrainte par ressort.

10. Agencement déflecteur (1) selon l'une quelconque des revendications 1 à 8, **caractérisé en ce que** les dispositifs de commutation de position (114, 115) comprennent respectivement un commutateur de position électrique activable mécaniquement (24, 25) et une soupape pneumatique actionnable électriquement (115, 114), qui peut être alimentée en courant par fermeture du commutateur de position électrique (24, 25), et est ainsi commutable.

11. Agencement déflecteur (1) selon l'une quelconque des revendications 4 à 10, **caractérisé en ce que** les dispositifs de commutation de position (15, 14 ; 115, 114) comprennent respectivement une soupape pneumatique, notamment une soupape à 3/2 voies (15, 14 ; 115, 114).

12. Agencement déflecteur (1) selon l'une quelconque des revendications 1 à 4, **caractérisé en ce que** les dispositifs d'ajustement sont actionnés électriquement et les dispositifs de commutation de position comprennent des commutateurs électriques.

13. Agencement déflecteur (1) selon l'une quelconque des revendications précédentes, **caractérisé en ce qu'**il s'agit d'un agencement déflecteur arrière, comprenant au moins un élément de guidage d'air de toit (4) et au moins un élément de guidage d'air latéral (5).

14. Agencement déflecteur (1) selon la revendication 13, **caractérisé en ce que** l'élément de guidage d'air latéral (5) est le premier élément de guidage d'air et l'élément de guidage d'air de toit (4) est le deuxième élément de guidage d'air,
dans la position de base, l'élément de guidage d'air de toit (4) peut être positionné sur ou au-dessus de la portière arrière (3) et l'élément de guidage d'air latéral (5) sur ou au-dessus de la portière arrière (3) et de l'élément de guidage d'air de toit (4), et
lors de l'ajustement de la position de base dans la position de conduite, dans le premier ajustement partiel, l'élément de guidage d'air latéral (5) est ajustable sans ajustement de l'élément de guidage d'air de toit (4).

15. Agencement déflecteur (1) selon la revendication 13 ou 14, **caractérisé en ce que**, pour chaque portière arrière (20) d'un poids-lourd (1), respectivement un élément de guidage d'air latéral (5) et un élément de guidage d'air de toit (4) sont prévus, qui sont commandés en parallèle, p. ex. par l'intermédiaire d'une soupape de commande de déflecteur centrale (10).

16. Agencement déflecteur (1) selon l'une quelconque des revendications 13 à 15, **caractérisé en ce que** les éléments de guidage d'air (4, 5) et les dispositifs d'ajustement (6, 7), de préférence l'ensemble de l'agencement déflecteur, peuvent être montés en totalité sur la portière arrière (20) ou les deux portières arrière (20) du véhicule.

17. Véhicule (2), notamment poids-lourd, comprenant un agencement déflecteur (1) selon l'une quelconque des revendications précédentes.

18. Véhicule selon la revendication 17, **caractérisé en ce qu'**à l'état de base plié, les portières arrière (20) peuvent être ouvertes et peuvent être pivotées vers l'avant de presque 270° pour la liaison à la paroi latérale du véhicule et pour la réception de l'agencement déflecteur plié (1) entre la portière arrière et la paroi latérale.
